# EUROPEAN PATENT SPECIFICATION

(11) **EP 1 668 768 B1**
(45) Date of publication and mention of the grant of the patent: **03.10.2007**
(21) Application number: 04764001.6
(22) Date of filing: 11.08.2004
(51) Int. Cl.: H02M 1/00, H02M 7/48

(54) **OPERATING A CONVERTER**
BETRIEB EINES WANDLERS
COMMANDE D'UN CONVERTISSEUR

(30) Priority: 03.09.2003 GB 0320621
(43) Date of publication of application: 14.06.2006
(73) Proprietor: Bombardier Transportation GmbH, 13627 Berlin (DE)
(72) Inventor: STIEGELER, Roland, 79725 Laufenburg (DE); EISELE, Andreas, 79787 Lauchringen (DE)
(74) Representative: Brunotte, Joachim Wilhelm Eberhard
(86) International application number: PCT/EP2004/008996
(87) International publication number: WO 2005/022733

(56) References cited:
- EP-A- 0 442 287
- PATENT ABSTRACTS OF JAPAN vol. 1999, no. 02, 26 February 1999 (1999-02-26) & JP 10 304554 A (MITSUBISHI ELECTRIC CORP), 13 November 1998 (1998-11-13) & DATABASE WPI Section EI, Week 199905 Derwent Publications Ltd., London, GB; Class X12, AN 1999-053019 & JP 10 304554 A (MITSUBISHI ELECTRIC CORP) 13 November 1998 (1998-11-13)
- PATENT ABSTRACTS OF JAPAN vol. 2003, no. 11, 5 November 2003 (2003-11-05) & JP 2003 189631 A (FUJI ELECTRIC CO LTD), 4 July 2003 (2003-07-04) & DATABASE WPI Section EI, Week 200364 Derwent Publications Ltd., London, GB; Class U24, AN 2003-674532 & JP 2003 189631 A (FUJI ELECTRIC CO LTD) 4 July 2003 (2003-07-04)
- PATENT ABSTRACTS OF JAPAN vol. 1995, no. 11, 26 December 1995 (1995-12-26) & JP 7 231554 A (ADVANTEST CORP), 29 August 1995 (1995-08-29) & DATABASE WPI Section EI, Week 199543 Derwent Publications Ltd., London, GB; Class X13, AN 1995-334683 & JP 07 231554 A (ADVANTEST KK) 29 August 1995 (1995-08-29)

## Description

The present invention relates to a method and an arrangement for operating a converter, wherein the converter comprises an input side for connecting the converter to an electric power source and/or power consumer via at least one electric input line, wherein an operation of the converter is controlled by a controlling device and wherein an operating state of the input line is repeatedly detected and a corresponding input quantity, in particular an electric current carried by the input line, is used to generate an input signal of the controlling device. In particular, the present invention relates to the field of high power applications, such as delivering electric energy to a driving motor of a rail vehicle or current conversion in connection with the generation of electric energy using wind energy.

There are several errors and malfunctions that might occur during the operation of such a converter: The operation of the input line might be disturbed, e.g. due to an interruption of the input line and/or due to a malfunction of any connected line, equipment or device. Also, a sensor, which is used to detect the operating state of the input line, might be defect itself and/or an energy supply for operating the sensor may fail. Furthermore, a signal connection from the detector to the controlling device may be interrupted or may not be realised (possibly due to a loose connector). In addition, or alternatively, any device (such as an amplifier), which is used to process the signal from the detector, may be defect.

The abstract of JP 10304554 describes a malfunction detector for an AC-to-DC converter capable of detecting a commutation failure.

A malfunction of the operation can result in severe damage, such as the explosion of electronic valves that are used in the converter to perform the current conversion.

It is an object of the present invention to provide a method and an arrangement for operating a converter of the type described above, which allow to at least partly monitor a function of the controlling device. In particular, it is an object to quickly detect a malfunction of the controlling device in the case of different possible reasons for the malfunction.

It is proposed to repeatedly perform a plausibility check, wherein the plausibility check comprises checking whether the input signal is plausible and/or whether the input signal is leading to plausible results of the operation of the converter. In particular, the controlling device performs the plausibility check. Preferably, the plausibility check is performed using a computer and software for operating the computer, wherein the computer is part of the controlling device.

The arrangement of the present invention, which is adapted to operate the converter, comprises a controlling device for controlling an operation of the converter and a detector for generating an input signal of the controlling device. The detector is attached to the input line, so that an operating state of the input line may be detected, wherein the controlling device comprises a checking device, which is adapted to perform a plausibility check for checking whether the input signal is plausible and/or is leading to plausible results of the operation of the converter, and wherein the checking device is connected to the detector.

In particular, the converter can be adapted to convert an alternating current (AC) to a direct current (DC) and/or vice versa, wherein an AC side (the input side) of the converter is connected to an alternating current network, wherein a DC side (an output side) of the converter is connected to a DC equipment, in particular to a DC intermediate circuit and wherein the converter comprises at least one electric or electronic valve adapted to repeatedly switch on and off an electric connection and thereby operating the converter. In a specific embodiment, the converter is a four quadrant AC/DC converter. The AC network may be a single-phase network or a network having three phases, for example. Alternatively, the converter can be, for example, a DC/DC converter, such as a step-up or step-down converter.

The power source may be an energy supply network, or any other type of power source. It is as well possible that electric energy is fed from the converter to the power source, in particular to the energy supply network. Alternatively or additionally, a power consumer may be connected to the input side. Consequently, the term "input side" is not limited to the side of the converter from which electric energy is input to the converter. During operation, electric energy may be delivered from the converter to the input side and/or vice versa.

Independent of the specific embodiment, the plausibility check is a reliable measure in monitoring the function of the controlling device, since the plausibility check is based on the input signal. In other words: there are several different reasons why the input signal may not represent a normal and/or desired operating state of the input line and in all of these cases the plausibility check reliably detects the malfunction.

There is a plurality of input lines on the input side of the converter. For example, it is known to operate two or three converter units in parallel to each other. In particular, each of the converter units may be connected on its input side to a separate winding on a secondary side of an AC transformer. On the output side, each of the converter units may be connected to the same DC intermediate circuit. In this case, there is one input line between each of the converter units and the respective winding of the transformer. In an alternative embodiment the converter comprises three branches with electronic valves, wherein each branch is connected to one of three phases of an alternating current network via in each case one input line.

The at least one input line may be a single electric wire, duct, rod or other type of electric connection or it may be a circuit having at least two separate electric connections. The operating state of each line may separately be detected. Preferably there is just a single detector attached to the input line. In the case of the input line being a circuit, the detector can be attached to just one of the plurality of electric connections of the input line. The term "attached" includes all different possibilities to arrange the detector, so that it is capable to detect the desired quantity.

Generally, it is preferred to use only a single input quantity (corresponding to an operating state of the input line) to perform the plausibility check. Furthermore, it is preferred to use only a single input quantity for each input line. For example, an electric current carried by the input line is used as the input quantity. In the case of the input line being a circuit, the electric current is preferably measured at one location of the input line only.

The inventors of the present invention have recognised the fact that it is not necessary to use redundant detectors and to compare the signals produced by the redundant detectors in order to check whether the signals are plausible. Rather, as will be described below, there are ways to obtain even more information from a single input signal than by just comparing the signals of redundant detectors.

If only a single input quantity of each input line is used, costs for more than one detector and the corresponding hardware for processing the detector signal can be saved. In the case that the converter is switched off when there is a significant difference between the two redundant signals, the redundant sensor increases the probability of a failure.

There are two basic ways to use the input signal in the plausibility check. a) The input signal itself can be evaluated. This includes the possibility to use the input signal in at least one of different states of processing (if applicable), for example a raw signal of the detector, an amplified input signal and/or a digital signal after digitising an analogue input signal. b) A secondary quantity can be evaluated, which quantity depends on the input signal and on at least one further quantity and/or variable. For example, such a secondary quantity is the deviation between a set value of a variable controlled by the controlling device and an actual value of the controlled variable. In particular, the controlling device may be adapted to control the operation of the converter by repeatedly adjusting a value of the controlled variable in dependence on the input signal, wherein the controlling device uses a set value for the controlled variable.

In one embodiment of the arrangement the checking device is directly connected to an input of the controlling device, wherein the input is adapted to receive an input signal from the detector. In addition or alternatively, the controlling device comprises a calculating unit for calculating an output variable in order to control the operation of the converter, wherein the checking device is directly connected to an output of the controlling device and wherein the output is adapted to receive an output signal, which corresponds to an instantaneous value of the output variable.

In a specific preferred embodiment, the controlling device uses the input signal to produce and output at least one PWM (pulse width modulation) signal. The PWM signal(s) is/are transferred to at least one switch (in particular an electronic valve) of the converter and, thereby, the converter is operated.

Preferably, the plausibility check is repeatedly performed during the operation of the converter. In particular, there is one plausibility check in every operating cycle of the controlling device. In the case of more than one input quantity (for example each one input quantity for a plurality of input lines) just one of the plurality of input quantities may be measured within each operating cycle.

In the following passage several different ways of performing the plausibility check are described in more detail, by way of example. In particular, it is possible to perform one or, during the same operation of a converter, more than one of these ways.

According to one way, wherein the input line is carrying an alternating current, a peak difference between a maximum peak value of the alternating current and a minimum peak value of the alternating current is used to make a decision whether the input signal is representing a normal and/or desired operating state of the input line. In particular, the minimum peak value and the maximum peak value are peak values within a single period of the alternating current. In case of a malfunction, for example when the input line and/or a detector connection is/are interrupted, the peak difference is zero or close to zero. In one embodiment, it is checked whether the peak difference is smaller than a first threshold value and or is smaller than or equal to a first threshold value. Since this criterion might be fulfilled during operation phases with small electric load or power, it is preferred to combine this criterion as follows.

A decision that the input signal does not represent a normal and/or desired operating state of the input line can be made using at least two criteria, wherein a first of the criteria is fulfilled if the peak difference is smaller than a first threshold value or is smaller than or equal to a first threshold value and wherein a second of the criteria is fulfilled if a deviation between a set value of a variable controlled by the controlling device and an actual value of the controlled variable is greater than a second threshold value or is greater than or equal to a second threshold value.

If the electric power transferred by the converter is small, but the input signal is plausible and is leading to a normal operation of the controlling device, the deviation between the set value and the actual value of the controlled variable is small. Consequently, only the first criterion is fulfilled. If the electric power transferred by the converter is high, the first criterion is not fulfilled, unless the generation and/or processing of the input signal is disturbed. In other words: both criteria are fulfilled only, if a) the operation of the input line; b) the generation of the input signal; c) the processing of the input signal; and d) the result obtained by the controlling device using the input signal are normal. The combination of the two criteria has the advantage that only one input signal is necessary to perform the plausibility check. Therefore any failure of a single input line and/or the corresponding input signal generation and processing can be detected and can be assigned to the input line, no matter if there are more than one input lines or not.

The following exemplary ways of performing the plausibility check refer to the case that the converter comprises a plurality of the electric input lines, wherein operating states of a plurality of the input lines are repeatedly detected and corresponding input quantities are used to generate input signals of the controlling device. In the arrangement, this corresponds to the embodiment that a first detector is provided, which is attached to a first one of the input lines, so that an operating state of the first input line can be detected, wherein the arrangement comprises a second detector, which is attached to a second one of the input lines, so that an operating state of the second input line can be detected, and wherein the checking device is connected to the first and the second detector. If there is a third input line, a third detector is provided, which is attached to the third input line (and so on).

The following description refers to the case of two input lines. If there are further input lines all combinations of each two input lines are treated in the same manner and, preferably, the corresponding steps are repeated for all combinations.

According to one way a first operating state value, which represents the operating state of a first one of the input lines, and a second operating state value, which represents the operating state of a second one of the input lines, are used to perform the plausibility check. In particular, the plausibility check comprises comparing the first and the second operating state value. In a corresponding embodiment of the arrangement the checking device comprises a comparison device, which is adapted to compare a first input value that is obtained by the first detector and a second input value that is obtained by the second detector.

With this embodiment the plausibility check can be performed particularly fast, if the input values can be expected to have a fixed and/or known relation to each other. For example, this is the case if the input lines are carrying the same effective mean current, e.g. if the input lines are connected to different windings of the same AC transformer. Especially in this case the first and the second operating state value may represent a time mean value of the electric current carried by the corresponding input line, in particular the effective mean value of an alternating current. The particularly fast plausibility check is useful for detecting a sudden interruption of the input line and/or of the detector signal processing lines and for detecting sudden breakdown of the detector.

The following refers to using output variables of the controlling device for the plausibility check. The controlling device is adapted to control the operation of the converter by repeatedly adjusting a first controlled variable in dependence on a first one of the input signals and by repeatedly adjusting a second controlled variable in dependence on a second one of the input signals, wherein a first output signal is used to adjust the first controlled variable and wherein a second output signal is used to adjust the second controlled variable and wherein the plausibility check comprises comparing the first and the second output signal.

One advantage is that not only the input signals are checked for plausibility, but also the processing of the input signals before entering the controlling device and the processing by the controlling device. This means that a failure of the controlling device operation can be detected as well. Another advantage is that there is no need to interfere with the internal processing of the input signals in the controlling device. It is sufficient to obtain the output signals at the output of the controlling device.

In a specific embodiment an absolute value of a difference of the first and the second output signal is used to perform the plausibility check. This embodiment is particularly useful for detecting a changing and/or changed gain of an amplifier, which amplifier is used to amplify the input signal or a signal that has been derived from the input signal.

In another specific embodiment a difference of the first and the second output signal, which may become positive and negative, is used to perform the plausibility check. This embodiment is particularly useful for detecting a changing and/or changed offset caused by an amplifier and/or caused by another device.

When it has been detected by performing the plausibility check that the input signal is not plausible and/or is not leading to plausible results of the operation of the converter, any suitable action can be taken, such as reducing the electric power, which is transferred by the converter, and/or stopping the operation of at least a part of the converter and/or of any connected device

In particular if the converter is used for delivering electric energy to a driving motor of a rail vehicle, special actions may be taken, which are not the result of the plausibility check. Examples for such an action are a fast alteration of the driving motor power and temporarily stopping the operation of one of the input lines. If such an action is taken, the plausibility check might result in inappropriate results, for example the result that the operation of the converter is completely stopped. Therefore it is proposed to provide the possibility that at least a part of the plausibility check is temporarily not performed. In other words: a regular checking is interrupted for a limited time.

Preferably, the input signal is repeatedly used to generate an intermediate value, which represents an intermediate result of the plausibility check, wherein a plurality of the intermediate values are used to make a decision whether the input signal is representing a normal and/or desired operating state of the input line. In particular, the arrangement for operating the converter comprises a checking device for performing the plausibility check, wherein the checking device comprises an integrating device, which is adapted to integrate an intermediate result of an operation of the checking device over time. In addition or alternatively, the intermediate values can be filtered.

The use of more than one of the intermediate values, in particular the filtering and/or the time integration, has the advantage that the effect of transient interferences can be eliminated. For example the input signal generation or processing might temporarily be interfered due to electromagnetic waves, which are emitted by an external device.

Specific embodiments of the present invention will be described in the following by way of example and with reference to the accompanying drawing. The figures of the drawing schematically show:
- Fig. 1: an arrangement for operating a line converter, wherein the arrangement corresponds to the presently known best mode of the invention;
- Fig. 2: devices and units used to process a detector signal of a detector shown in Fig. 1;
- Fig. 3: details of one of the two line converter units shown in Fig.1;
- Fig. 4: a diagram illustrating the values of quantities used in a first step of a method for operating a line converter, wherein the method corresponds to the presently known best mode of the invention;
- Fig. 5: a diagram illustrating the values of quantities used in another step of the method of Fig. 4;
- Fig. 6: a diagram illustrating the values of quantities used in still another step of the method of Fig. 4;
- Fig. 7: a diagram illustrating a normal operation of the line converter shown in Fig. 1, wherein the normal operation is terminated by an interruption of an input line of a line converter; and
- Fig. 8: details of a checking device for performing a plausibility check.

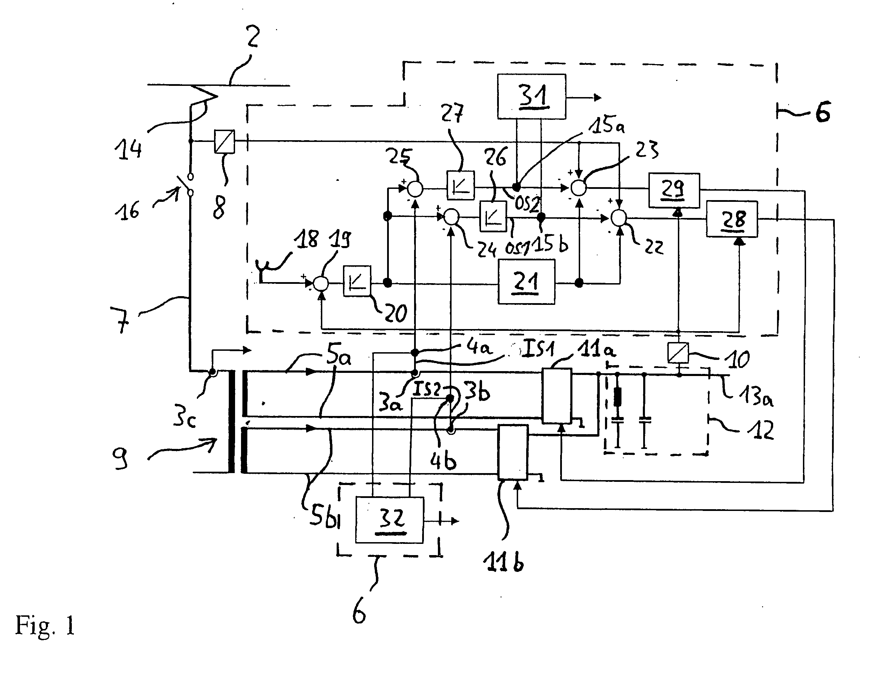

Fig. 1 shows a four quadrant line converter 11, which comprises converter units 11a, 11b. Each converter unit 11a, 11b is connected to an input line circuit 5a, 5b on an input side of the line converter 11. The input line circuits 5a, 5b connect the corresponding converter unit 11a, 11b to separate secondary windings of a transformer 9. A primary side of the transformer 9 is connected via a primary side connection 7 and via a pantograph 14 to a single-phase AC power supply network 2. The primary side connection 7 can the interrupted by operating a main switch 16. On an output side of the line converter 11, each converter unit 11a, 11b is connected to a DC intermediate circuit 12 comprising a DC connection line 13a. For example, a motor-side line converter of a railway traction vehicle may be connected to the DC connection line 13a.

In each case one detector for detecting an operating state of the input line circuit 5a or 5b is attached to the input line circuits 5a, 5b. In the specific embodiment shown, the detectors are current sensors 3a, 3b. There is no further detector attached to the input lines 5a, 5b, which is used to perform a plausibility check. However, it is as well possible to use a detector for generating an input signal for the plausibility check, which detector is attached to the primary side of the transformer 9 (for example the current sensor 3c in Fig. 1).

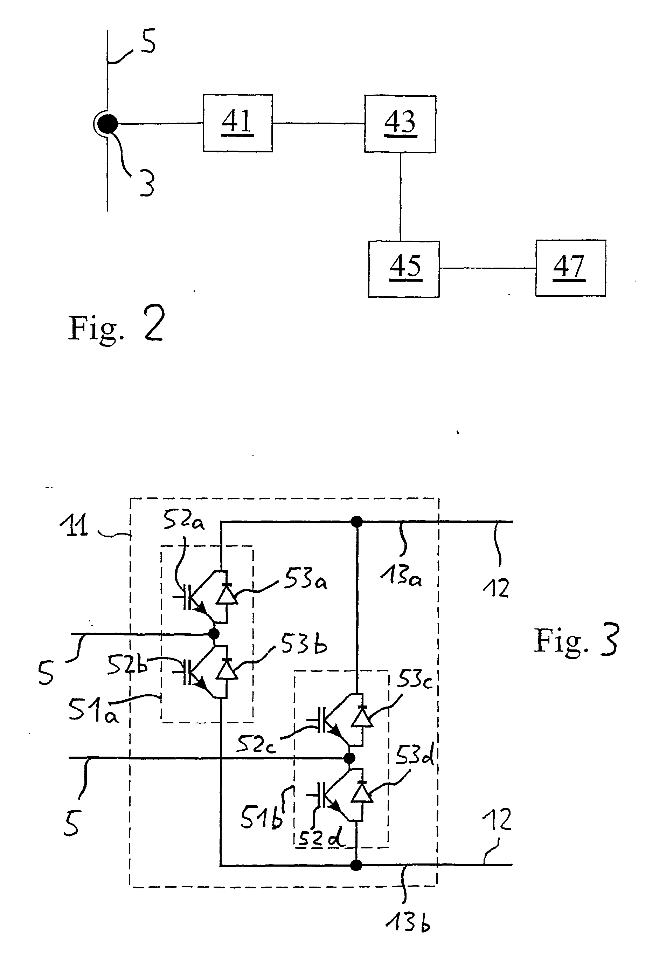

In high-power applications, such as in railway traction vehicles, the current sensor function may be based on the principle of detecting a current by evaluating the magnetic field produced by the current flow. An example of such a current sensor 3 and a corresponding arrangement for processing the sensor signal is shown in Fig. 2. The current sensor 3 is attached to an input line 5 and generates a current signal, which corresponds to the current carried by the input line 5. A signal line for outputting the sensor signal is connected to a current/voltage converter 41 for converting the current signal to a voltage signal. The current/voltage converter 41 is connected to a filter 43 for filtering the voltage signal in order to eliminate interfering signal parts. An output of the filter 43 is connected to an input of an amplifier 45 for amplifying the voltage signal. An output of the amplifier 45 is connected to an analogue to digital (A/D) converter for digitising the voltage signal. The digitised signal can be used for digital data processing, in particular performed by a computer of a controlling device 6 shown in Fig. 1. For example, the devices 41, 43, 45, 47 of the arrangement shown in Fig. 2 may be arranged between the current sensor 3a or 3b and a signal input 4a or 4b of the controlling device 6. Alternatively, at least some of the devices 41, 43, 45, 47 may be part of the controlling device 6.

The controlling device 6 is adapted to control the operation of the line converter 11 by generating PWM signals, for example. For this purpose, the controlling device 6 comprises a first 29 and a second 28 PWM signal generating device, which are connected, in each case, to a signal input of the converter unit 11a or 11b. The signals transferred to the converter units 11a, 11b may be pulse signals for switching on and off electronic valves of the converter, wherein the pulse signals are emitted at times which correspond to the PWM signals. However, the present invention is not limited to controlling the converter using PWM signals. Other controlling methods may be performed.

The first and the second current sensor 3a, 3b is connected to a first 24 or second 25 combination device for combining an input signal (IS1; IS2) from the current sensor 3 a, 3b with an output signal of an intermediate circuit controller 20, which is adapted to generate a common output signal for all input line circuits 5. The output signal corresponds to a set value of an input line circuit current. The operation and the output of the intermediate circuit controller 20 depend on an actual value of the intermediate circuit voltage and on a set value of the intermediate circuit voltage. Consequently, an intermediate circuit voltage sensor 10 is connected to a combination device 19, wherein the actual value, which is measured by the sensor 10, is subtracted from the set value, which is input via a set value input 18 to the combination device 19.

The output signal of the intermediate circuit controller 20 is not only transferred to the combination devices 24, 25 but also to a calculation device 21 for a taking into account the behaviour of the transformer 9. A corresponding software model of the transformer 9 may be implemented. An output signal of the calculation device 21 is transferred to a third combination device 22 and to a fourth combination device 23. The combination device 22 is located in an output signal path of a first input line controller 26. The combination device 23 is located in an output signal path of a second input line controller 27. An input of the first input line controller 26 is connected to the first combination device 24. An input of the second input line controller 27 is connected to the second combination device 25. Furthermore, an output of a primary side voltage sensor 8 for measuring the voltage at the primary side connection 7 is connected to the third 22 and to the second 23 combination device. As a result, the following quantities are taken into account in the PWM signals generated by the first 29 and the second 28 PWM signal generating devices: a) the input line circuit currents of the first 5a and second 5b input line circuit; b) the voltage at the primary side connection 7; c) the voltage of the intermediate circuit 12; and d) a set value in for the voltage of the intermediate circuit 12.

Besides the devices and units mentioned above, the controlling device 6 comprises a first 31 and a second 32 checking device. The first checking device 31 is connected to the output signal paths of the first 26 and of the second 27 input line controller at connection points 15a, 15b. As described in more detail below, the first checking device 31 can perform a plurality of steps of a plausibility check procedure using the output signals (OS1; OS2) of the first 26 and of the second 27 input line controller. The second checking device 31 is directly connected to an output of the first 3a and of the second 3b current sensor at connection points 4a, 4b. This includes the case, that at least a part of the signal processing, which has been described in connection with Fig. 2, is performed by the current sensor or by a corresponding arrangement. As described in more detail below, the second checking device 32 can perform a plurality of steps of a plausibility check procedure using the output signals of the current sensors 3a, 3b.

It is as well possible that the first 31 and the second 32 checking device are the same device. In particular, it is preferred that the whole plausibility check procedure is performed by a central processing unit of the controlling device 6.

A more detailed construction of a line converter unit 11, which may be used in the arrangement shown in Fig. 1, will now be described with reference to Fig. 3. The line converter unit 11 comprises two parallel paths, which connect a first 13a and a second 13b DC connection line of a DC intermediate circuit 12. Each of the two paths comprises one bridge 51 a, 51b having two electronic valves 52a, 52b or 52c, 52d (for example Gate Turn-Off thyristors or Insulated Gate Bipolar Transistors, IGBTs), which are connected in series to each other. In each case one of the electric connections of an input line circuit 5 is connected to a connecting point between the two electronic valves 52a, 52b or 52c, 52d. In each case one diode 53a, 53b, 53c, 53d is connected antiparallel to the electronic valves 52a, 52b, 52c, 52d. Input signal lines of the electronic valves 52a, 52b, 52c, 52d for receiving pulse signals (e.g. generated by the first or second PWM signal generating device 28, 29) are omitted in Fig. 3.

According to the best mode of the invention a method for operating a line converter comprises several steps of performing a plausibility check. In particular, it can be decided in each step, separately from the other steps, whether the input signal is plausible and/or is leading to plausible results of the operation of the line converter. Consequently, the safety of detection is increased. The steps can be performed one after the other in the same or in different order and/or at least some of the steps can be performed parallel to each other. Preferably, a central processing unit of the controlling device performs the steps one after the other, wherein the order of performing the steps is not changed during operation of the controlling device.

For example, the central processing unit may be operated performing consecutive working cycles at constant cycle duration. In each cycle, all or one of the steps may be performed. In a specific embodiment, the cycle duration may be in the range of 0.5 to 5 ms. If the line converter is an AC/DC line converter and if the frequency of the alternating current is in the range of 50 Hz, the duration of one period of the alternating current is significantly longer than the duration of the working cycles. The same applies to other well-known AC frequencies of 60 Hz and 16 2/3 Hz. Generally, it is preferred that the cycle duration is shorter than the reciprocal frequency of the alternating current in order to enable the controlling device to quickly detect a failure. In particular, the working cycle length may be identical to the length of a working cycle of a controlling process, which is performed by the controlling device.

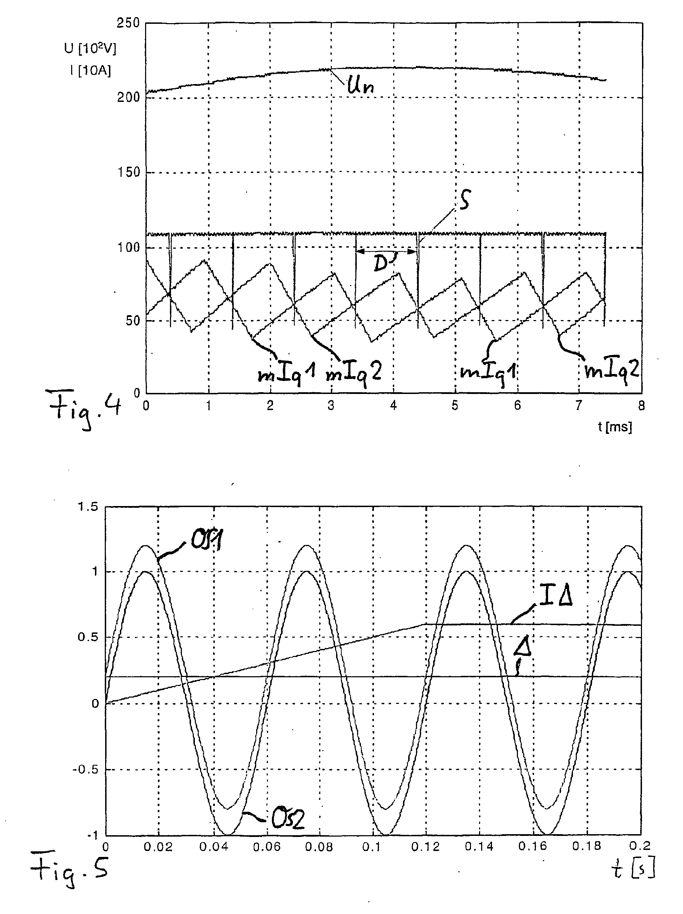

A first one of the steps is described in the following: In each cycle the absolute value of the difference between current values carried by the two input lines is calculated. Preferably, the two input line currents are repeatedly sampled at the same time. Fig. 4 shows the input line currents mIq1 and mIq2 as functions of time. The two time lines have a sawtooth-like behaviour, comprise a phase shift to each other of half a period and intersect each other twice a period. Preferably, the two line currents are sampled at the time of intersection, in particular at the two intersection times in each period. Provided there is no failure, the sampled current values are mean values (because of the sawtooth-like behaviour) and the difference between the two mean values is very small. Consequently, a very small threshold value can be defined and it can be detected in every working cycle whether the difference is matching and/or exceeding the threshold value. In a particular embodiment, a counter is provided, which counts the number of consecutive working cycles, in which the threshold value is matched and/or exceeded. The counter is reset to zero, if the difference is smaller than the threshold value. For example, if the counter value of becomes three, it is decided that there is a failure.

With the first step a line failure of the input line and/or of a processing line for processing the sensor signals and/or a failure of one of the current sensors can be detected very quickly.

Fig. 4 also shows the sampling signal S and the voltage at the primary side of a transformer, the secondary side of which is connected to the input lines.

In the following, step two is described: an absolute value of the difference between an actual value of a variable controlled by the controlling device and between a set value of the controlled variable is evaluated. In particular, the difference is compared with a threshold value and a first criterion is fulfilled, if the threshold value is matched and/or exceeded (i.e. the difference is larger than the threshold value). There is a second criterion in this step and it is decided that the input signal is not plausible or is not leading to plausible results of the operation of the line converter only if both criteria are fulfilled. The second criterion is fulfilled, if the peak difference between a maximum peak value of the alternating current of one of the input lines and a minimum peak value of the same alternating current is smaller than a threshold value or is smaller than or equal to a threshold value. The benefits from such a combination of two criteria have been described above.

In the following the third step and the fourth step are described: in both steps the difference between a first output signal and a second output signal is evaluated. The first output signal is output by a first controller for controlling a first line converter unit, which is connected to a first input line. The second output signal is output by a second controller for controlling a second line converter unit, which is connected to a second input line. The difference is integrated over time. For example, the integration is performed as floating window integration, in particular over a floating time window of two periods of an alternating current at the input side of the line converter, which means, for example, over two periods of the alternating current of a power supply network.

In the third step an absolute value of the difference is not calculated, so that the difference may become positive or negative. In the following, it will be referred to Fig. 5, which shows the first output signal OS1 of the first input line controller 26 and the second output signal OS2 of the second input line controller 27 Furthermore, the difference Δ of the controller outputs and the integrated difference IΔ are shown.

If the integrated difference IΔ matches and/or exceeds a threshold value, it is decided that there is an offset failure of an amplifier for amplifying a detector signal or an offset failure produced by another device, which contributes to the processing of the detector signal. Since a variation of an internal resistance and/or a variation of a leakage inductance of the input line circuits are not contributing to a change of the offset, a very small threshold value can be chosen. Consequently, step three can be very sensitive. Fig. 5 illustrates the situation that the offset of the input signal, which is used to generate the output signal OS1, changes at time t = 0 by 0.2. The duration of one period of the alternating current (and consequently of the output signals OS1 and OS2) is 0.06 s.

As a result of the floating window length of two periods, the maximum value of the integrated difference IΔ is reached at t = 0.12 s.

In step four the absolute value of the difference between the first and the second output signal OS1, OS2 is integrated. A corresponding case is illustrated in Fig. 6. By evaluating the absolute value of the difference, variations of the offset and of the gain contribute to the integrated absolute value IΔm. However, since variations of the gain result in a shift of the phase of the corresponding signal, the effect of the offset variation is at least partly eliminated. Consequently, step four is more sensitive to variations of the gain.

If the integrated absolute value IΔm of the difference Δ matches or exceeds a threshold value, it is decided that the input signal, which is obtained from at least one input line, is no longer leading to plausible results of the operation of the line converter.

In the case of Fig. 6 the gain of one of the input signals changes at t = 0 s. Consequently, the difference Δ of the output signals OS1, OS2 is fluctuating over time. As a result, the integrated absolute value of IΔm is rising and is reaching its maximum value after two periods of the alternating current.

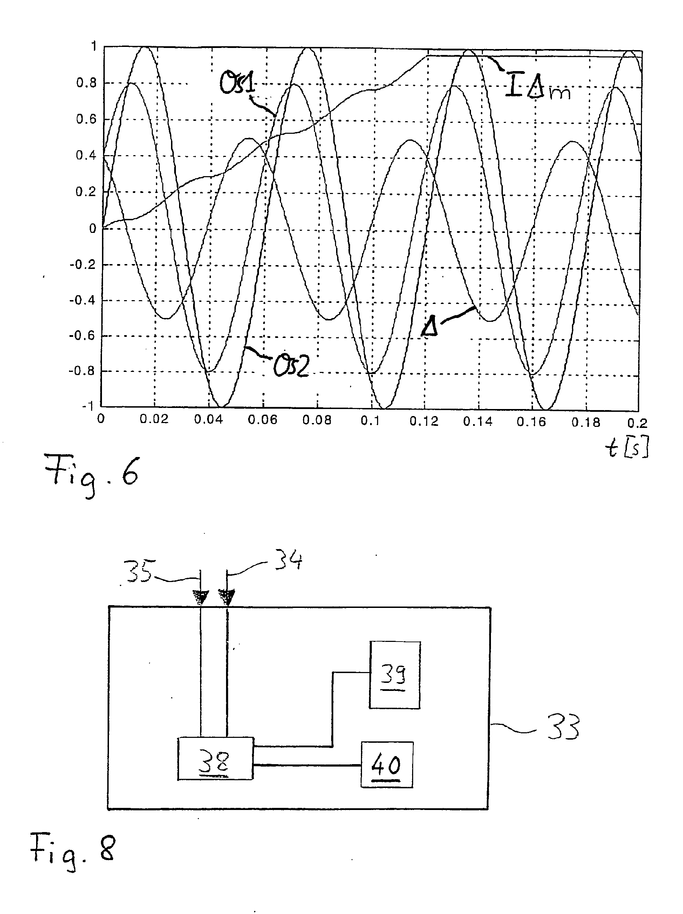

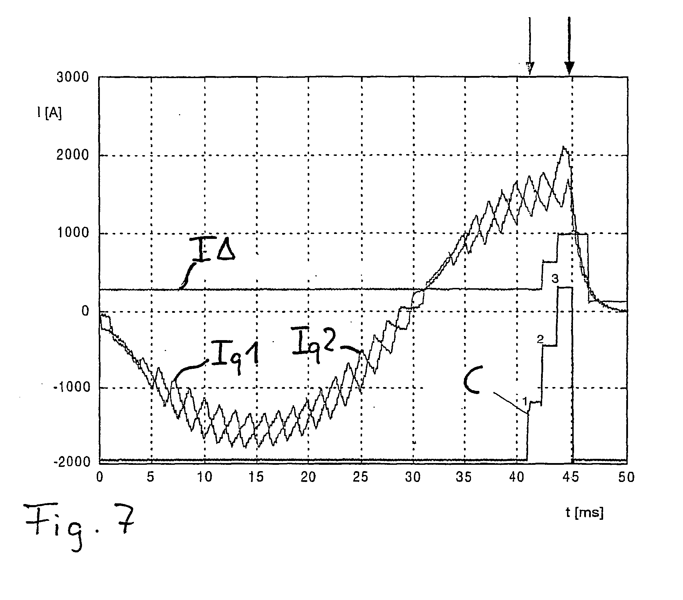

An example of a checking device is schematically shown in Fig. 8. The checking device 33 comprises a first input line 34 and a second input line 35. A comparator 38 is connected to the first and second input line 34, 35. For example, the input signals, which are input via the first and second input lines 34, 35, may be the sensor signals and/or may be the controller output signals of the steps described above. A counter 39, which may perform the counting function described in step one, is connected to the comparator 38. The comparator 38 may perform the remainder of the processing operations of the steps one to four. Alternatively, the integrating operations, which are described in the steps three and four, can be performed by a separate integrator 40, which may be connected to the comparator 38. All functions, which have been described in connection with Fig. 8, may be performed by a central processing unit, in particular by a microelectronic device, using corresponding software.

Fig. 7 illustrates an example of a line converter operation, wherein a sensor signal connection from one of two input lines to the controlling device is interrupted when the line converter is working at maximum power. Fig. 7 shows the first input line current Iq1 and the second input line current Iq2, the difference of the input line currents IΔ and the counter signal C of the counter, which was described in connection with step one above. At the time t = 41 ms (marked by the left arrow) the interruption of the sensor signal line takes place. As a result, the corresponding input line circuit controller tries to compensate the apparent drop of the input line current. Consequently, the current of the corresponding input line is rising, so that the difference between the input line currents is rising as well. Since the threshold value of the difference is exceeded in three consecutive working cycles, the counter signal reaches counter level three and the operation of the line converter is terminated (at the time marked by the right arrow), for example by interrupting the main switch 16 at the primary side connection 7. In the present example, the working cycle duration is 1 ms and the detection of the failure only takes 4 ms.

## Claims

1. A method for operating a converter (11), in particular for delivering electric energy to a driving motor of a rail vehicle, wherein
- the converter (11) comprises an input side for connecting the converter (11) to an electric power source (2) and/or power consumer via at least one electric input line (5),
- the converter (11) comprises a plurality of the electric input lines (5a, 5b), wherein operating states of a plurality of the input lines (5a, 5b) are repeatedly detected and corresponding input quantities are used to generate input signals of a controlling device (6),
- an operation of the converter (11) is controlled by the controlling device (6),
- an operating state of the input line (5, 7) is repeatedly detected and a corresponding input quantity, in particular an electric current carried by the input line (5, 7), is used to generate an input signal of the controlling device (6),
- the controlling device (6) controls the operation of the converter (11) by repeatedly adjusting a first controlled variable in dependence on a first one (IS1) of the input signals and by repeatedly adjusting a second controlled variable in dependence on a second one (IS2) of the input signals, wherein a first output signal (OS1) is used to adjust the first controlled variable and wherein a second output signal (OS2) is used to adjust the second controlled variable and,
- a plausibility check is repeatedly performed, in particular by the controlling device (6),
- the plausibility check comprises checking whether the input signal is plausible and/or is leading to plausible results of the operation of the converter (11), and
- the plausibility check comprises comparing the first (OS1) and the second (OS2) output signal.

2. The method of claim 1, wherein a decision is made whether the input signal is representing a normal and/or desired operating state of the input line by evaluating the input signal.

3. The method of claims 1 or 2, wherein the input line is carrying an alternating current, wherein a peak difference between a maximum peak value of the alternating current and a minimum peak value of the alternating current is used to make a decision whether the input signal is representing a normal and/or desired operating state of the input line.

4. The method of claim 3, wherein the minimum peak value and the maximum peak value are peak values within a single period of the alternating current.

5. The method of one of claims 1 to 4, wherein the input signal is repeatedly used to generate an intermediate value, which represents an intermediate result of the plausibility check, and wherein a plurality of the intermediate values are used to make a decision whether the input signal is representing a normal and/or desired operating state of the input line.

6. The method of one of claims 1 to 5, wherein an absolute value of a difference of the first (OS1) and the second (OS2) output signal is used to perform the plausibility check.

7. The method of one of claims 1 to 6, wherein a difference of the first (OS1) and the second (OS2) output signal, which may become positive and negative, is used to perform the plausibility check.

8. An arrangement for operating a converter, in particular for operating a converter, which is used to deliver electric energy to a driving motor of a rail vehicle, wherein the arrangement is adapted to operate a converter (11), which comprises an input side for connecting the converter (11) to an electric power source (2) and/or power consumer via a plurality of electric input lines (5a, 5b), and wherein the arrangement comprises:
- a controlling device (6) for controlling an operation of the converter (11),
- a plurality of detectors (3a, 3b), wherein each detector (3a, 3b) is attached to a different one of the input lines (5a, 5b) for generating an input signal of the controlling device (6),
- wherein the controlling device (6) is adapted to control the operation of the converter (11) by repeatedly adjusting a first controlled variable in dependence on a first one (IS1) of the input signals and by repeatedly adjusting a second controlled variable in dependence on a second one (IS2) of the input signals, wherein a first output signal (OS1) of the controlling device (6) is used to adjust the first controlled variable and wherein a second output signal (OS2) is used to adjust the second controlled variable,
- wherein the controlling device (6) comprises a checking device (31, 32; 33), which is adapted to perform a plausibility check for checking whether the input signal is plausible and/or is leading to plausible results of the operation of the converter (11) and
- wherein the checking device (33) comprises a comparator (38) adapted to compare the first (OS1) and second (OS2) output signal of the controlling device (6).

9. The arrangement of claim 8, wherein the checking device (33) comprises an integrating device (40), which is adapted to integrate an intermediate result of an operation of the checking device (33) over time.

## Patentansprüche

1. Verfahren zum Betrieb eines Wandlers (11), insbesondere zum Abliefern von elektrischer Energie an einen Antriebsmotor eines Schienenfahrzeugs, wobei
der Wandler (11) eine Eingangsseite zum Verbinden des Wandlers (11) mit einer elektrischen Stromquelle (2) und/oder einem Stromverbraucher über mindestens eine elektrische Eingangsleitung (5) umfaßt,
der Wandler (11) mehrere der elektrischen Eingangsleitungen (5a, 5b) umfaßt, wobei Betriebszustände mehrerer der Eingangsleitungen (5a, 5b) wiederholt detektiert und entsprechende Eingangsgrößen verwendet werden, um Eingangssignale einer Steuereinrichtung (6) zu erzeugen,
ein Betrieb des Wandlers (11) durch die Steuereinrichtung (6) gesteuert wird,
ein Betriebszustand der Eingangsleitung (5, 7) wiederholt detektiert und eine entsprechende Eingangsgröße, insbesondere ein von der Eingangsleitung (5, 7) geführter elektrischer Strom, verwendet wird, um ein Eingangssignal der Steuereinrichtung (6) zu erzeugen,
die Steuereinrichtung (6) den Betrieb des Wandlers (11) steuert, indem eine erste Steuervariable wiederholt abhängig von einem ersten (IS1) der Eingangssignale eingestellt und eine zweite Steuervariable wiederholt abhängig von einem zweiten (IS2) der Eingangssignale eingestellt wird,
wobei ein erstes Ausgangssignal (OS1) zum Einstellen der ersten Steuervariablen und ein zweites Ausgangssignal (OS2) zum Einstellen der zweiten Steuervariablen verwendet wird und
wiederholt eine Plausibilitätsprüfung insbesondere durch die Steuereinrichtung (6) ausgeführt wird,
die Plausibilitätsprüfung umfaßt, zu prüfen, ob das Eingangssignal plausibel ist und/oder zu plausiblen Ergebnissen des Betriebs des Wandlers (11) führt, und
die Plausibilitätsprüfung umfaßt, das erste (OS1) und das zweite (OS2) Ausgangssignal zu vergleichen.

2. Verfahren nach Anspruch 1, wobei durch Auswerten des Eingangssignals eine Entscheidung getroffen wird, ob das Eingangssignal einen normalen und/oder erwünschten Betriebszustand der Eingangsleitung darstellt.

3. Verfahren nach Anspruch 1 oder 2, wobei die Eingangsleitung einen Wechselstrom führt, wobei eine Spitzendifferenz zwischen einem maximalen Spitzenwert des Wechselstroms und einem minimalen Spitzenwert des Wechselstroms verwendet wird, um eine Entscheidung zu treffen, ob das Eingangssignal einen normalen und/oder erwünschten Betriebszustand der Eingangsleitung darstellt.

4. Verfahren nach Anspruch 3, wobei der minimale Spitzenwert und der maximale Spitzenwert Spitzenwerte in einer einzigen Periode des Wechselstroms sind.

5. Verfahren nach einem der Ansprüche 1 bis 4, wobei das Eingangssignal wiederholt zum Erzeugen eines Zwischenwerts verwendet wird, der ein Zwischenergebnis der Plausibilitätsprüfung darstellt, und wobei mehrere Zwischenwerte verwendet werden, um eine Entscheidung zu treffen, ob das Eingangssignal einen normalen und/oder erwünschten Betriebszustand der Eingangsleitung darstellt.

6. Verfahren nach einem der Ansprüche 1 bis 5, wobei ein Absolutwert einer Differenz des ersten (OS1) und des zweiten (OS2) Ausgangssignals verwendet wird, um die Plausibilitätsprüfung auszuführen.

7. Verfahren nach einem der Ansprüche 1 bis 6, wobei eine Differenz des ersten (OS1) und des zweiten (OS2) Ausgangssignal, die positiv oder negativ werden kann, verwendet wird, um die Plausibilitätsprüfung auszuführen.

8. Anordnung zum Betrieb eines Wandlers (11), insbesondere zum Betrieb eines Wandlers, der zum Abliefern von elektrischer Energie an einen Antriebsmotor eines Schienenfahrzeugs verwendet wird, wobei die Anordnung dafür ausgelegt ist, einen Wandler (11) zu betreiben, der eine Eingangsseite zum Verbinden des Wandlers (11) mit einer elektrischen Stromquelle (2) und/oder einem Stromverbraucher über mehrere elektrische Eingangsleitungen (5a, 5b) umfaßt, wobei die Anordnung folgendes umfaßt:
eine Steuereinrichtung (6) zum Steuern eines Betriebs des Wandlers (11),
mehrere Detektoren (3a, 3b), wobei die Detektoren (3a, 3b) jeweils an verschiedene der Eingangsleitungen (5a, 5b) angeschlossen sind, um ein Eingangssignal der Steuereinrichtung (6) zu erzeugen,
wobei die Steuereinrichtung (6) dafür ausgelegt ist, den Betrieb des Wandlers (11) zu steuern, indem eine erste Steuervariable wiederholt abhängig von einem ersten (IS1) der Eingangssignale eingestellt und eine zweite Steuervariable wiederholt abhängig von einem zweiten (IS2) der Eingangssignale eingestellt wird, wobei ein erstes Ausgangssignal (OS1) der Steuereinrichtung (6) zum Einstellen der ersten Steuervariablen und ein zweites Ausgangssignal (OS2) zum Einstellen der zweiten Steuervariablen verwendet wird,
wobei die Steuereinrichtung (6) eine Prüfeinrichtung (31, 32; 33) umfaßt, die dafür ausgelegt ist, eine Plausibilitätsprüfung auszuführen, um zu prüfen, ob das Eingangssignal plausibel ist und/oder zu plausiblen Ergebnissen des Betriebs des Wandlers (11) führt, und
wobei die Prüfeinrichtung (33) einen Komparator (38) umfaßt, der dafür ausgelegt ist, das erste (OS1) und das zweite (OS2) Ausgangssignal der Steuereinrichtung (6) zu vergleichen.

9. Anordung nach Anspruch 8, wobei die Prüfeinrichtung (33) eine Integriereinrichtung (40) umfaßt, die dafür ausgelegt ist, ein Zwischenergebnis eines Betriebs der Prüfeinrichtung (33) über die Zeit zu integrieren.

## Revendications

1. Procédé destiné à faire fonctionner un convertisseur (11), en particulier destiné à transmettre de l'énergie électrique à un moteur d'entraînement d'un véhicule sur rails, dans lequel
- le convertisseur (11) comprend un côté d'entrée destiné à relier le convertisseur (11) à une source de puissance électrique (2) et/ou à un consommateur de puissance via au moins une ligne d'entrée électrique (5),
- le convertisseur (11) comprend une pluralité des lignes d'entrée électriques (5a, 5b), dans lequel des états de fonctionnement d'une pluralité des lignes d'entrée (5a, 5b) sont détectés de manière répétée et des quantités d'entrée correspondantes sont utilisées pour générer des signaux d'entrée d'un dispositif de commande (6),
- un fonctionnement du convertisseur (11) est commandé par le dispositif de commande (6),
- un état de fonctionnement de la ligne d'entrée (5, 7) est détecté de manière répétée et une quantité d'entrée correspondante, en particulier un courant électrique transporté par la ligne d'entrée (5, 7), est utilisée pour générer un signal d'entrée du dispositif de commande (6),
- le dispositif de commande (6) commande le fonctionnement du convertisseur (11) en réglant de manière répétée une première variable commandée en fonction d'un premier (IS1) des signaux d'entrée et en réglant de manière répétée une seconde variable commandée en fonction d'un deuxième (IS2) des signaux d'entrée, dans lequel un premier signal de sortie (OS1) est utilisé pour régler la première variable commandée et dans lequel un second signal de sortie (OS2) est utilisé pour régler la seconde variable commandée et,
- un contrôle de vraisemblance est effectué de manière répétée, en particulier par le dispositif de commande (6),
- le contrôle de vraisemblance comprend le fait de contrôler si le signal d'entrée est vraisemblable et/ou mène à des résultats vraisemblables du fonctionnement du convertisseur (11), et
- le contrôle de vraisemblance comprend le fait de comparer le premier (OS1) et le second (OS2) signal de sortie.

2. Procédé selon la revendication 1, dans lequel il est décidé si le signal d'entrée représente un état de fonctionnement normal et/ou souhaité de la ligne d'entrée en évaluant le signal d'entrée.

3. Procédé selon la revendication 1 ou 2, dans lequel la ligne d'entrée transporte un courant alternatif, dans lequel une différence de crête entre une valeur de crête maximum du courant alternatif et une valeur de crête minimum du courant alternatif est utilisée pour décider si le signal d'entrée représente un état de fonctionnement normal et/ou souhaité de la ligne d'entrée.

4. Procédé selon la revendication 3, dans lequel la valeur de crête minimum et la valeur de crête maximum sont des valeurs de crête dans une seule période du courant alternatif.

5. Procédé selon l'une des revendications 1 à 4, dans lequel le signal d'entrée est utilisé de manière répétée pour générer une valeur intermédiaire, qui représente un résultat intermédiaire du contrôle de vraisemblance, et dans lequel une pluralité des valeurs intermédiaires sont utilisées pour décider si le signal d'entrée représente un état de fonctionnement normal et/ou souhaité de la ligne d'entrée.

6. Procédé selon l'une des revendications 1 à 5, dans lequel une valeur absolue d'une différence du premier (OS1) et du second (OS2) signal de sortie est utilisée pour effectuer le contrôle de vraisemblance.

7. Procédé selon l'une des revendications 1 à 6, dans lequel une différence du premier (OS1) et du second (OS2) signal de sortie, qui peut devenir positive et négative, est utilisée pour effectuer le contrôle de vraisemblance.

8. Agencement destiné à faire fonctionner un convertisseur, en particulier destiné à faire fonctionner un convertisseur, qui est utilisé pour transmettre de l'énergie électrique à un moteur d'entraînement d'un véhicule sur rails, dans lequel l'agencement est adapté pour faire fonctionner un convertisseur (11), qui comprend un côté d'entrée destiné à relier le convertisseur (11) à une source de puissance électrique (2) et/ou à un consommateur de puissance via une pluralité de lignes d'entrée électriques (5a, 5b), et dans lequel l'agencement comprend :
- un dispositif de commande (6) destiné à commander un fonctionnement du convertisseur (11),
- une pluralité de détecteurs (3a, 3b), dans lesquels chaque détecteur (3a, 3b) est attaché à une différente des lignes d'entrée (5a, 5b) pour générer un signal d'entrée du dispositif de commande (6),
- dans lequel le dispositif de commande (6) est adapté pour commander le fonctionnement du convertisseur (11) en réglant de manière répétée une première variable commandée en fonction d'un premier (IS1) des signaux d'entrée et en réglant de manière répétée une seconde variable commandée en fonction d'un deuxième (IS2) des signaux d'entrée, dans lequel un premier signal de sortie (OS1) du dispositif de commande (6) est utilisé pour régler la première variable commandée et dans lequel un second signal de sortie (OS2) est utilisé pour régler la seconde variable commandée,
- dans lequel le dispositif de commande (6) comprend un dispositif de contrôle (31, 32 ; 33), qui est adapté pour effectuer un contrôle de vraisemblance destiné à contrôler si le signal d'entrée est vraisemblable et/ou mène à des résultats vraisemblables du fonctionnement du convertisseur (11) et
- dans lequel le dispositif de contrôle (33) comprend un comparateur (38) adapté pour comparer le premier (OS1) et le second (OS2) signal de sortie du dispositif de commande (6).

9. Agencement selon la revendication 8, dans lequel le dispositif de contrôle (33) comprend un dispositif d'intégration (40), qui est adapté pour intégrer un résultat intermédiaire d'un fonctionnement du dispositif de contrôle (33) au fil du temps.
